# EUROPEAN PATENT APPLICATION

(11) **EP 1 870 427 A1**
(43) Date of publication of application: **26.12.2007**
(21) Application number: 06012931.9
(22) Date of filing: 23.06.2006
(51) Int. Cl.: C08J 5/18, C08L 27/06, C08L 29/04, B41M 5/00

(54) **Method for enhancing the resolution in inkjet printing**

(71) Applicant: Renolit AG, 67547 Worms (DE)
(72) Inventor: Piernot, Oliver, 1200 Bruxelles (BE); Bossuyt, Jochen, 8581 Kerkhove (BE)
(74) Representative: Wagner, Jutta

(57) **Abstract**

The present invention relates to a method of improving absorption of ink on films from a composition containing a polyvinyl chloride as polymeric base by admixing a polymer comprising vinyl acetate groups. The invention further provides films made from a composition comprising a polyvinyl chloride as polymeric base and a polymer containing vinyl acetate groups.

## Description

The present invention relates to a method for enhancing the absorption of inks on films for inkjet printing and the films.

Inkjet printing is a method of direct application of ink droplets on the surface of a substrate like polymeric films. It is easily adapted to a control by computers. In contrast to the classical printing technologies using a contact between the substrate and printing devices (like cylinders or panels) during inkjet printing no such contact between the printing equipment and the substrate takes place. The resolution obtained depends directly on the fineness of the droplets and the precision with which their application is controled.

It is important that the droplets do not expand too much on the substrate for obtaining a good resolution. The ratio between the area of the dried ink droplet on the substrate and the original diameter of the applied droplet ("dot gain") should be as low as possible, preferably between 1,5 and 3, to obtain a high resolution. This problem is even more serious when using inks based on organic solvents because they posess a high fluidity and expand very rapidly.

One remedy for reducing "dot gain" is an enhanced absorption of the ink into the imprinted substrate so that it cannot expand on the surface. In this respect it is known to use inks that partly dissolve the surface of the polymeric substrate. If the polymeric film is made from PVC (polyvinylchloride) inks comprising ketones like methyl hexyl ketone or cyclohexanone lead to a rapid swelling of the surface of the PVC which enhaces their absorption. Such inks are unfavourable because their vapour is toxic. Their use necissitates a recovering and systems for protection and ventilation which are costly.

It is further known to admix additives to the polymer base of the film which enhance absorption. DE 199 43 339 (Renolit Werke GmbH) describes a method for inkjet printing with films that contain cellulose esters with acetyl, propionyl or butyryl groups. Those known methods necissitate significant amounts of additve (10 - 20 %) which increase the price of the film and deteriorate other properties (e.g. mechanical) of the film.

The present invention has set itself the object to provide films that can be imprinted with high resolution by inkjet printing without being costly and without the use of toxic solvents.

This object is solved providing PVC films as substrate for inkjet printing containing a polymer comprising vinyl acetate groups as additive. It has been found that this admixture accelerates absorption and improves the resolution therewith.

Therefore the present invention relates to a method of enhancing resolution of ink on films from a composition containing a polyvinyl chloride as polymeric base by admixing a polymer comprising vinyl acetate groups. The invention further provides films made from a composition comprising a polyvinyl chloride as polymeric base and a polymer containing vinylactete groups.

The term film as used herein designates a flat product with a thickness in one dimension at least 100 fold preferably at least 1000 fold less than in its other two dimensions. Typically the films according to the invention have a thickness from 230 to 250 µm, a width from 10 to 250 cm and a length from 10 to 10.000 m. Advantageously the films are handled rolled up. They are manufactured in a manner known per se by extrusion or preferably by calendaring from a composition comprising a polymeric base which preferably makes up at least 40 % by weight, more preferably at least 50 % by weight and especially preferred at least 60 % by weight of the composition. Other components may be: secondary polymers, several additives like stabilizers, plasticisers, pigments, or filling materials like e.g. silicic acid, calcium carbonate.

The term films as used herein also comprises laminates of two, three or more layers, provided the layer to be printed on has a compositrion according to the invention. The layers may be joint by any method known in the art, e.g. they may be co-extruded or conncted by adhesives or adhesive intermediate layers.

According to the invention the film comprises a polymer containing vinyl acetate groups as additive. The polymer may be a vinyl acetate homopolymer or a copolymer of vinyl acetate with other monomers like ethylene, vinyl chloride, and/or carbon monoxide. Other comonomers are also possible, carboxylic acid monomers serve to enhance the adhesion to other layers for example.

The copolymer may be a random, block, graft or star copolymer. Preferred are random copolymers.

The comonomers are chosen to adjust the properties of the polymer, for example its miscibility with the polymeric base, the polarity, or other properties like adhesion to other polymers. The comonomers may be present in amounts of 50 to 90 parts by weight based on the polymer. There may be 1, 2, 3 or more comonomers present, preferably one or two.

It is possible to use two or more different polymers as additive, e.g. a 1:1 mixture of polyvinyl acetate and a copolymer of vinyl acetate, ethylene and carbon monoxide.

The molecular weight (Mw) ranges typically from 10000 to 200000 and preferably from 50000 to 100000 g/mol. Polymers with a lower molecular mass tend to stick to the cylinders, polymers with a higher molecular mass are difficult to incorporate into the composition.

If necessary it is preferred to stabilize the polymer with antioxidants like phenols (e.g. Irganox 1010 or B225 from Ciba).

The composition should preferably contain from 1 to 50 %, more preferable from 5 to 40 % by weight of the polymer containing vinyl acetate groups based on the mass of the composition. The amount should further be adjusted to provide an amount of 1 to 50 %, preferably 5 to 20 % and especially preferred 5 to 10 % of vinyl acetate groups in the composition.

The polymeric base is chosen according to the intended application of the imprinted film. It is preferred that the polymeric base is a vinyl chloride homopolymer, but it is also possible that the polymeric base is a copolymer of vinyl chloride with vinyl acetate or acrylic acid esters (butyl acrylate for instance). The amount of comonomers ranges preferably from 5 to 30 %. The molecular weight of the polymeric base ranges typically from 50000 to 300000, preferably from 80000 to 200000 g/mol.

In one embodiment the polymer containing vinyl acetate groups is miscible with the polymeric base and the composition has a polarity similar to that of the ink. This allows easy penetration of the ink into the film. The polarity of the composition should be approximately not more than 10 % lower or higher than that of the ink, preferably not more than 5 % and especially preferred not more than 2 %.

According to a second embodiment the polymer comprising vinyl acetate groups is not miscible with the composition and is finely dispersed within the composition. In this case the polymer should have a polarity similar to that of the ink as defined above.

The composition may additionally comprise one or more usual additives. Preferred are stabilizers, e.g. thermal stabilizers such as carboxylic fatty acid salts of barium, calcium or zinc, like zinc oleates or barium tertiary butyl benzoates. They may be present in an amount from 1 to 3 %. Further preferred are processing aids such as copolymers based on acrylic acid esters (butyl acrylate, methyl(meth)acrylate) and also styrene or butadiene. They may be present in an amount from 1 to 3 %. Further preferred are plasticisers in an amount of from 5 to 50 parts per 100 parts polymeric base. Plasticisers are preferably added in an amount of from 10 to 30 parts per 100 parts polymeric base.

However, it is a particular advantage of the polymer added as additive for enhancing absorption that the copolymers of vinyl acetate and to a lesser degree also polyvinyl acetate itself show a plasticising effect. The amount of plasticiser may be reduced or even a separate plasticiser omitted altogether according to the invention. Especially preferred in this respect are terpolymers of vinyl acetate, ethylene and carbon monoxide as polymer containing vinyl acetate groups.

The invention will be illustrated by the following examples without restricting the scope to the specific embodiments described. All parts and % are by weight if not explicitly stated otherwise.

### Examples

### 1. Materials used in the compositions

A typical known film for inkjet printing contains the following substances:

| | |
|---|---|
| PVC (polymeric base) | 100 |
| Plasticiser | 21 |
| epoxidized soy bean oil | 2 |
| thermal stabiliser | 3 |
| processing aid | 2 |
| TiO₂ | 15 |

Other additives may be present in minor amounts, i.e. less than 1 part, e.g. pigments for adjusting the colour of the film.

Upon addition of 10 to 40 % of the polymer containing vinyl acetate monomers (VAc) according to the invention, several test have been made. The polymers used are:
- Polyvinyl acetate (PVAc), homopolymer with Tg~42°C, Tm~105°C, Mw-80000 - 100000 g/mol from Wacker AG.
- Ethylene vinyl acetate copolymers (E/VAc) with 40 % vinyl acetate and MFI (2.16kg, 190°C)=57 from DuPont de Nemours
- Vinyl acetate vinyl chloride copolymers (VC/Vac) with 34 % vinyl acetate, Tg~58°C, Mw-40000-50000 g/mol from Wacker AG.
- Vinyl acetate - vinyl chloride - carbon monoxide terpolymers (E/VAc/CO) with 27 % vinyl acetate, 10 % carbon monoxide and MFI (2.16kg-190°C)=35 g/mol from DuPont de Nemours.

The known properties are summarized below:

| designation | PVAc | E/VAc | VC/VAc | E/CO/VAc |
|---|---|---|---|---|
| % VAc (by weight) | 100 | 40 | 34 | 27 |
| Tg (°C) | ∼42 | | 58 | -32 |
| Tm (°C) | 105 | 47 | | 45 |
| MFI (190°C-2.16kg) | | 57 | | 35 |
| K | | | 42 | |
| Mw (g/mol) | 80-100 10³ | | 40-50 10³ | ∼ 50 10³ |

### Preparation of the film

The components are mixed in an open mixer and then the polymer is added in the quantity specified.

### Testing of drying rate

Ink is applied in specified quantities filling quadrates of equal area on the film. Subsequently an absorbent paper is placed on the quadrate with a defined pressure at different delay times. The weight was 5 kg, the paper was pressed 10 sec against the film, directly and 4, 8, 12 and 16 minutes after application of the ink. It is then evaluated how much more or less quadrates transferred ink to the paper compared to a standard film. The results for different compositions are assembled in the following table. For each tested film the polymer added and its amount is given as well as the VAc content in the polymer and the resulting VAc content in the composition.

| Polymer added | amount % | % VAc in polymer | % Vac in compos. | Result of drying test after | | | | | |
|---|---|---|---|---|---|---|---|---|---|
| | | | | 0' | 4' | 8' | 12' | 16' | average |
| none | 0 | 0 | 0 | | | | | | |
| Cellulose ester | 20 | 0 | 0 | 1 | 2 | 2 | 1 | 2 | 1.6 |
| PVAc | 10 | 100 | 10 | 1 | 0 | 1 | 1 | 2 | 1 |
| PV Ac | 20 | 100 | 20 | 1 | 1 | 1 | 1 | 2 | 1.2 |
| E/VAc/CO | 20 | 27 | 5.4 | 1 | 1 | 2 | 2 | 3 | 1.8 |
| E/VAc/CO | 40 | 27 | 10.8 | 1 | 2 | 2 | 3 | 3 | 2.2 |
| VC/VAc | 13.25 | 34 | 4.505 | 1 | 1 | 0 | 0 | 1 | 0.6 |
| VC/VAc | 26.5 | 34 | 9.01 | 1 | 1 | 2 | 1 | 2 | 1.4 |
| E/VAc | 12.5 | 40 | 5 | 2 | 1 | 1 | 0 | 3 | 1.4 |
| E/VAc | 25 | 40 | 10 | 0 | 1 | 2 | 2 | 2 | 1.4 |

In all cases the VAc has increased the rate of absorption of the ink into the film. It is possible to increase the rate with higher contents of VAc except with the copolymers of vinyl acetate and ethylene showing a constant rate of absorption. The terpolymer containing vinyl acetate, ethylene and carbon monoxide is the most efficient based on the vinyl acetate content.

### Testing of resolution

The second test performed is designated as resolution test and based on the measurement of the diameter of droplets. A higher rate of absorption will lead to smaller diameter of the droplets and their spreading. For the test PVC-films with the compositions already describes have been made and ink is applied via inkjet printing with the droplet diameter adjusted to 35 µm. This corresponds to an intended surface of 1000 µm². After drying the printed dots have a diameter D and a surface S which are measured. One calculates two parameters, the spreading ratio corresponding to the ratio between the measured surface S and the initial intended surface of 1000 µm² and the dot gain which corresponds to the ratio between the diameter of the dot as measured and the droplet diameter of 35 µm.

The results, the average dot diameter, spreading ratio and dot gain, are summarized in the following table.

| Polymer added | amount % | % VAc in polymer | % Vac in compos. | dot diam. µm | Spreading ratio | dot gain |
|---|---|---|---|---|---|---|
| none | 0 | 0 | 0 | 11700 | 11.7 | 3.36 |
| Cellulose ester | 20 | 0 | 0 | 6938 | 6.9 | 2.64 |
| PVAc | 5 | 100 | 5 | 8278 | 8.3 | 2.89 |
| PVAc | 10 | 100 | 10 | 6754 | 6.7 | 2.61 |
| PVAc | 15 | 100 | 15 | 6987 | 7.0 | 2.65 |
| PVAc | 20 | 100 | 20 | 6133 | 6.1 | 2.48 |
| E/VAc/CO | 20 | 27 | 5.4 | 8695 | 8.7 | 2.96 |
| E/VAc/CO | 40 | 27 | 10.8 | 7608 | 7.6 | 2.77 |
| VC/VAc | 13.25 | 34 | 4.505 | 9845 | 9.8 | 3.15 |
| VC/VAc | 26.5 | 34 | 9.01 | 7440 | 7.4 | 2.74 |
| E/VAc | 12.5 | 40 | 5 | 5969 | 6.0 | 2.45 |
| E/VAc | 25 | 40 | 10 | 5335 | 5.3 | 2.32 |

The addition of vinyl acetate monomers enhances the resolution through providing a faster absorption of the ink into the film. This effect is present with a vinyl acetate polymer that is miscible with the polymeric base as well as with one being finely dispersed therein. The results are even better compared for equal amounts of vinyl acetate for the finely dispersed embodiments.

## Claims

1. Method for enhancing the resolution in inkjet printing on films from a composition containing a polyvinyl chloride as polymeric base, **characterized in that** a polymer comprising vinyl acetate groups is admixed whereby the amount of vinyl acetate groups in the composition is from 1 to 50 % based on the mass of the composition.

2. Method according to claim 1, **characterized in that** the amount of vinyl acetate groups in the composition is from 5 to 20 %, preferably from 5 to 10 %.

3. Method according to claim 1 or 2, **characterized in that** the polymer comprising vinyl acetate groups is present in an amount of from 1 to 50 %, preferably from 5 to 40 % based on the mass of the composition.

4. Method according to any one of claims 1 to 3, **characterized in that** the polymeric base is selected from vinylchloride homopolymers and vinyl chloride copolymers.

5. Films as substrate for inkjet printing made from a composition comprising a polyvinyl chloride as polymeric base **characterized in that** the composition comprises a polymer containing vinyl acetate groups whereby the amount of vinyl acetate groups in the composition is from 1 to 50 % based on the mass of the composition.

6. Films according to claim 5, **characterized in that** the polymer containing vinyl acetate groups comprises a homopolymer or a copolymer with one or more comonomers or a mixture of different polymers containing vinyl acetate groups.

7. Films according to claim 6, **characterized in that** the comonomers are chosen from ethylene, vinyl chloride and carbon monoxide or mixtures thereof.

8. Films according to claim 5 or 6, **characterized in that** the comonomers are present in an amount of from 50 to 90 % based on the mass of the polymer containing vinyl acetate groups.

9. Films according to any one of claims 5 to 8, **characterized in that** the composition additionally contains common additives.
